Europäisches Patentamt

European Patent Office

Office européen des brevets

(11) Numéro de publication: **0 250 307**
**A1**

# DEMANDE DE BREVET EUROPEEN

(21) Numéro de dépôt: **87401336.0**

(22) Date de dépôt: **15.06.87**

(51) Int. Cl.⁴: **G 09 F 9/00**
// G06F13/40

(30) Priorité: **17.06.86 FR 8608738**

(43) Date de publication de la demande:
**23.12.87 Bulletin 87/52**

(84) Etats contractants désignés:
**AT BE CH DE ES FR GB GR IT LI LU NL SE**

(71) Demandeur: **Paulmier, Gilles**
**Maison Ur/Begia Urcuit**
**F-64990 Saint-Pierre-D'Irube (FR)**

(72) Inventeur: **Paulmier, Gilles**
**Maison Ur/Begia Urcuit**
**F-64990 Saint-Pierre-D'Irube (FR)**

(74) Mandataire: **Laget, Jean-Loup et al**
**Cabinet Pierre Loyer 18, Rue de Mogador**
**F-75009 Paris (FR)**

(54) **Dispositif d'affichage électronique de données.**

(57) La présente invention concerne un dispositif d'affichage électronique de données.

Selon l'invention, il comprend :
- un processeur central (2) présentant une entrée (9) et une sortie (10) de données,
- une pluralité de n modules d'affichage (7.i) comportant chacun un microprocesseur individuel (12) présentant une entrée (13) et une sortie (14) de données,
- une ligne unique de transmission de données (4), et une ligne de masse (6), reliant en parallèle ledit processeur (2) et chacun desdits modules d'affichage (7.i) et une ligne d'alimentation électrique (5),
- une premier dispositif d'interface (3) adapté pour relier, de façon sélective, l'entrée (9) ou la sortie (10) dudit processeur (2) à ladite ligne de données (4), et
- des seconds dispositifs d'interface (8.i) adaptés chacun pour relier, de façon sélective, l'entrée (13) ou la sortie (14) d'un microprocesseur (12) à ladite ligne de données (4).

Fig. 1

## Description

La présente invention concerne un dispositif d'affichage électronique de données.

L'invention s'applique plus particulièrement, mais non exclusivement, à l'affichage de donnée informatives, concernant la nature, le prix, etc... d'une pluralité de types de produits dont chacun se trouve dans un site ou rayon prticulier d'un magasin à grande surface.

Traditionnellement, de telles données informatives sont affichées sur des supports ou étiquettes, en papier ou en matière plastique, qui sont chacun placés sous le produit correspondant qui est à l'étalage dans le magasin. Lorsque, par exemple, le prix du produit change, il est alors nécessaire de remplacer, manuellement, l'étiquette correspondante, par une nouvelle étiquette. Pour éviter de remplacer, à chaque modification de prix, l'étiquette associée au produit, on a imaginé différents artifices permettant de modifier, toujours manuellement, par exemple le prix de l'article en cause.

Il est bien évident que de telles façons de faire nécessitent, surtout pour des magasins à grande surface où le nombre d'articles exposés à la vente est considérable, beaucoup de temps et occupent un personnel important qui pourrait être affecté à des taches plus rentables. De plus, dans ce traitement manuel, les sources d'erreur sont très nombreuses et pratiquement incontournables.

C'est pourquoi, on a développé, récemment, des dispositifs permettant l'affichage électronique des données informatives requises pour chaque article, et cela à l'endroit même du magasin où l'article est exposé à la vente.

De tels dispositifs, qui sont pilotés par un ordinateur central, nécessitent un nombre de câbles de transmission de données, ainsi que de câbles d'alimentation électrique, qui doit être égal au nombre de modules d'affichage, correspondant chacun à un produit déterminé et qui servent de support des données informatives concernant chaque produit à adresser.

En outre, on doit prévoir un nombre de portes d'accès égal au nombre de modules d'affichage.

Il est bien évident que de tels dispositifs nécessitent une lourde organisation électronique qui, surtout quand le nombre d'articles en magasin est très important, est très complexe à piloter.

La présente invention a pour objet d'éviter les inconvénients de l'art antérieur et concerne un dispositif d'affichage électronique de données, dans lequel tous les modules d'affichage peuvent être reliés au processeur central de façon prticulièrement simple et fiable.

A cet effet, le dispositif d'affichage électronique de données est remarquable, selon l'invention, en ce qu'il comprend :
- un processeur central présentant une entrée et une sortie de données,
- une pluralité de modules d'affichage comportant chacun des moyens d'affichage proprement dits reliés à un microprocesseur individuel présentant une entrée et une sortie de données,
- une ligne unique de transmission de données et une ligne de masse, chacune desdites lignes reliant en parallèle ledit processeur central et chacun desdits modules d'affichage, et une ligne d'alimentation électrique reliant en parallèle lesdits modules d'affichage,
- un premier dispositif d'interface associé audit processeur central et qui est adapté pour relier, de façon sélective, l'entrée ou la sortie de données dudit processeur central à ladite ligne de transmission de données, et
- des seconds dispositifs d'interface qui sont, chacun, associés au microprocesseur d'un module d'affichage déterminé et adaptés pour relier, de façon sélective, l'entrée ou la sortie de données dudit microprocesseur à ladite ligne de transmission de données.

Ainsi, le dispositif d'affichage électronique de données selon l'invention est particulièrement avantageux.

En effet, en principe, il n'y a pas de limitation au nombre de modules d'affichage pouvant être connectés sur un même réseau et disposant chacun d'un numéro de codage distinct des autres.

De fait, un grand nombre de modules d'affichage est connecté en n'utilisant qu'une ligne unique de transmission de données qui peut être prolongée à volonté, une ligne d'alimentation électrique et une ligne de masse.

La simplicité de la mise en oeuvre est telle qu'elle ne nécessite d'installer qu'un seul câble contenant trois conducteurs et cela pour l'ensemble de tous les modules d'affichage.

Le coût de l'installation et de la matière première (câble) est donc inférieur aux solutions proposées dans l'art antérieur.

La tension électrique d'alimentation des modules d'afficheurs n'étant que de 12 volts, par exemple, cela autorise une installation dans un milieu accessible au grand public.

Un même type de dispositif d'interface est utilisé pour transmettre les données à l'ensemble des modules d'affichage qui reçoivent tous le même message.

Ce dispositif d'interface est également adapté pour être connecté à un ordinateur ou processeur central et pour fonctionner à partir d'un protocole de communication parmi les plus utilisés, par exemple, le protocole série asynchrone type "v24 RS232c".

En particulier, les premier et seconds dispositifs d'interface présentent une configuration identique, et comportent chacun une première liaison reliant la sortie de données du processeur central, respectivement la sortie de données du microprocesseur d'un module d'affichage, à la ligne de transmission de données par l'intermédiaire d'un transistor dont la base est reliée à ladite sortie et dont le trajet émetteur-collecteur relie la ligne de transmission de données à la masse ; et une seconde liaison reliant l'entrée de données du processeur central, respectivement l'entrée de données du microprocesseur d'un module d'affichage, à ladite ligne de transmission de données par l'intermédiaire d'un composant électronique à conduction unidirectionnelle.

Avantageusement, une résistance de limitation de courant peut être prévue entre ladite sortie et ledit transistor, et une résistance de limitation de courant et de protection peut être prévue entre ledit composant électronique à conduction unidirectionnelle et la ligne de transmission de données.

Les figures du dessin annexé feront bien comprendre comment l'invention peut être réalisée. Sur ces figures, des références identiques désignent des éléments semblables.

La figure 1 représente schématiquement le dispositif d'affichage électronique de données selon l'invention.

La figure 2 est un schéma du dispositif d'interface, selon l'invention, associé au processeur central.

La figure 3 est un schéma d'un dispositif d'interface, selon l'invention, associé à un module d'affichage.

La figure 4 est une vue en perspective éclatée d'un agencement possible d'un module d'affichage.

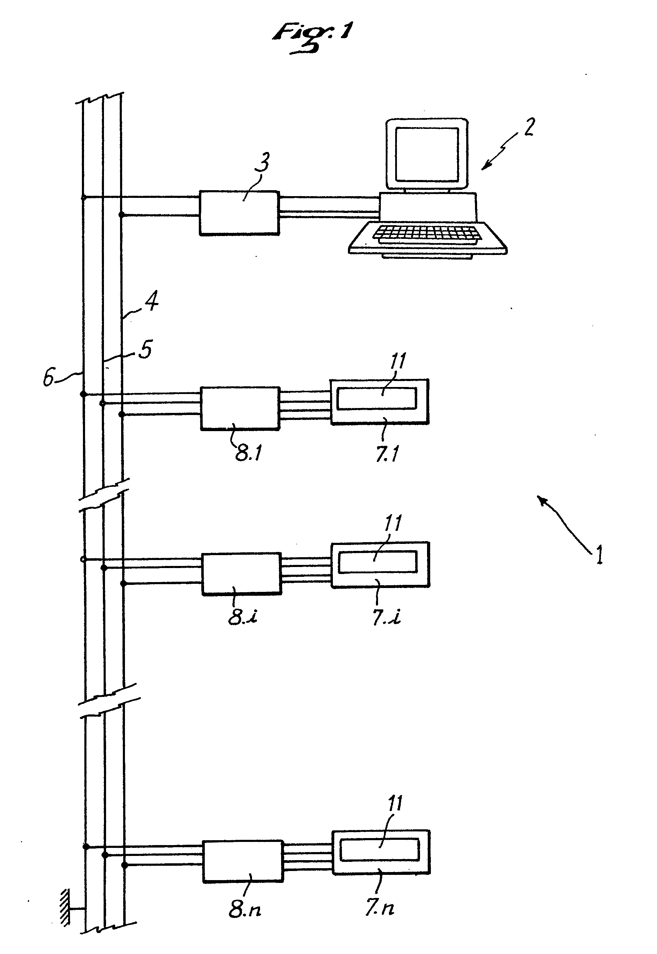

En se référant à la figure 1, le dispositif d'affichage électronique de données 1, selon l'invention, comprend un processeur ou ordinateur central 2 relié, par l'intermédiaire d'un premier dispositif d'interface 3, à une ligne unique de transmission de données 4, et à une ligne de masse 6. La transmission de données peut être effectuée à l'aide de fibres optiques, de systèmes infra-rouge, radio, à courant porteur, ultra-sonore.

De plus, chacune desdites lignes 4 et 6 relie en parallèle le processeur central 2 et chacun des modules d'une pluralité de n modules d'affichage 7.i (avec pour lesdits modules $1 \leq i \leq n$) par l'intermédiaire de seconds dispositifs d'interface 8.i (avec pour lesdits dispositifs d'interface $1 \leq i \leq n$). Chaque module d'affichage 7.i est associé à un dispositif d'interface individuel 8.i.

En outre, une ligne d'alimentation électrique 5 relie en parallèle les modules d'affichage 7.i.

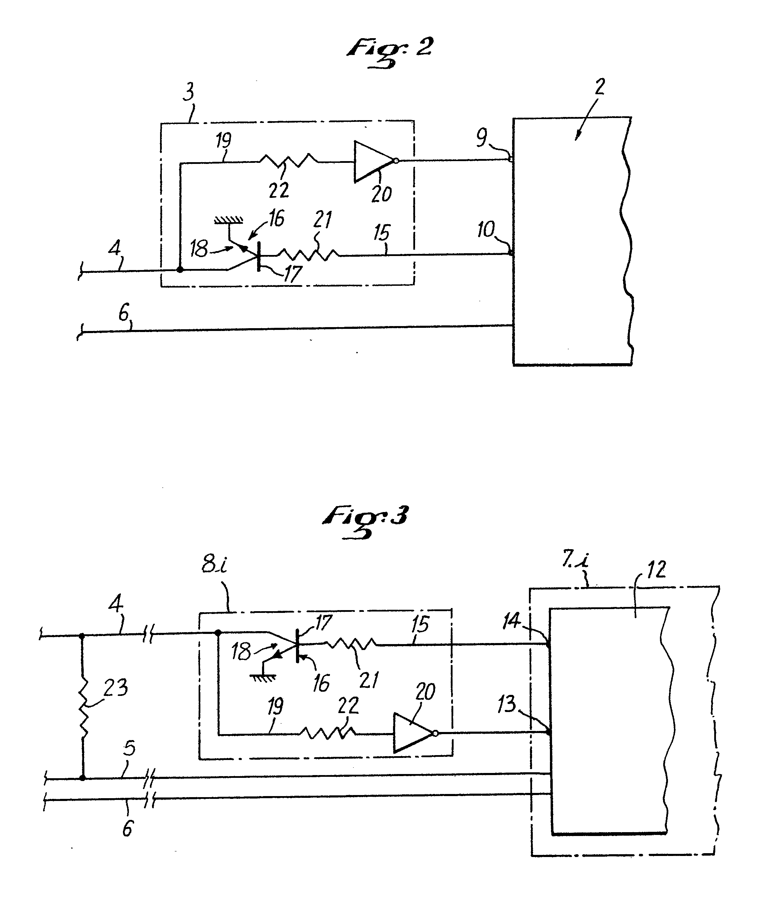

En se référant à la figure 2, le processeur central 2 présente, en particulier, une entrée 9 de données et une sortie 10 de données. Le premier dispositif d'interface 3, associé au processeur central 2, est adapté pour relier, de façon sélective, l'entrée 9 ou la sortie 10 de données du processeur central 2 à la ligne unique de transmission de données 4.

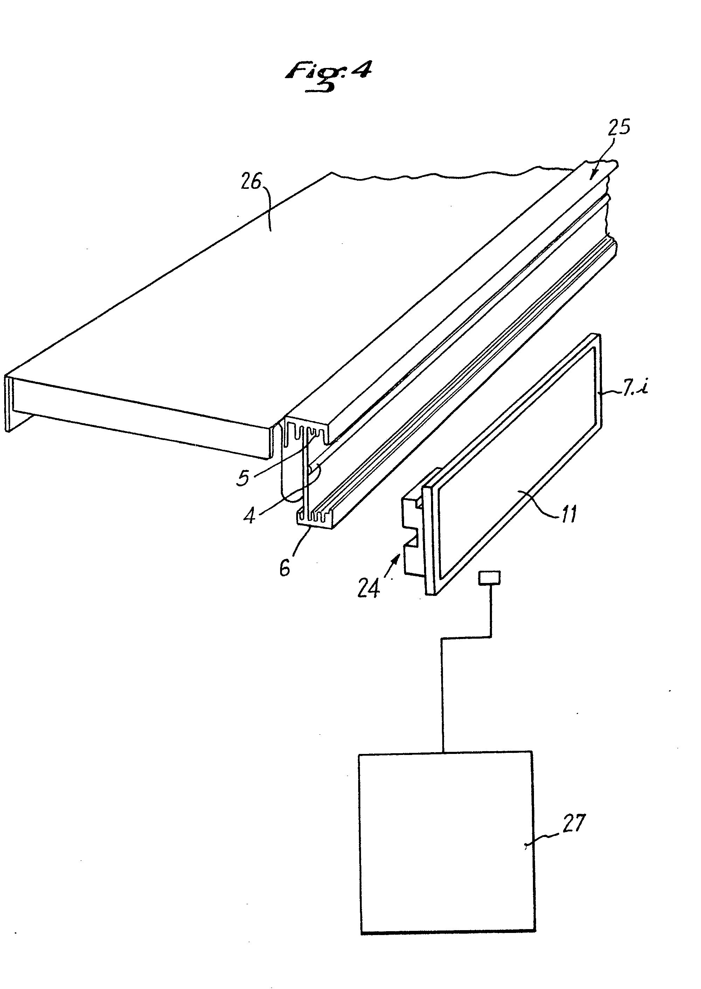

En outre, chaque module d'affichage 7.i comporte des moyens d'affichage proprement dits 11, qui sont constitués, par exemple, par des diodes électroluminescentes, des tubes cathodiques, des lasers, des écrans "plasma", des cellules à cristaux liquides, et sont reliés à un micro-processeur individuel 12 présentant une entrée de données 13 et une sortie de données 14 (figure 3). Les seconds dispositifs d'interface 8.i, associés chacun au microprocesseur 12 d'un module d'affichage déterminé 7.i, sont adaptés pour relier, de façon sélective, l'entrée 13 ou la sortie 14 du microprocesseur 12 à la ligne de données 4.

Plus particulièrement, en se référant encore aux figures 2 et 3, les premier 3 et seconds 8.i dispositifs d'interface présentent une configuration identique, et comportent, chacun, une première liaison 15 reliant la sortie de données 10 du processeur central 2, respectivement la sortie de données 14 du microprocesseur 12 d'un module d'affichage 7.i, à la ligne de transmission de données 4 par l'intermédiaire d'un transistor 16 dont la base 17 est reliée à ladite sortie 10 ou 14 et dont le trajet émetteur-collecteur 18 relie la ligne de transmission de données à la masse.

En outre, les premier 3 et sedonds 8.i dispositifs d'interface comportent, chacun, une seconde liaison 19 reliant l'entrée de données 9 du processeur central 2, respectivement l'entrée de données 13 du microprocesseur 12 d'un module d'affichage 7.i, à la ligne de transmission de données 4 par l'intermédiaire d'un composant électronique à conduction unidirectionnelle 20, comme par exemple une porte logique de technologie "CMOS" présentant une impédance très élevée qui ne perturbe pas la ligne.

Enfin, une résistance de limitation de courant 21 est prévue entre ladite sortie 10 ou 14 et le transistor 16, et une résistance de limitation de courant et protection 22 est prévue entre le composant électronique à conduction unidirectionnelle 20 et la ligne de transmission de données 4.

En outre, une seule résistance 23 entre la ligne de transmission de données 4 et la ligne d'alimentation électrique 5, "tire" la ligne 4 à un niveau haut de $+12$ Volts, par exemple. Cette résistance n'est utile que dans un seul dispositif d'interface et peut être localisée dans le dispositif d'interface relié au processeur central.

La sortie du processeur central peut commander ledit transistor qui "met" la ligne à 0 Volt et tous les modules d'affichage peuvent "lire", via ledit composant à conduction unidirectionnelle, le 0 Volt ; et inversement à partir de la sortie de chaque microprocesseur.

La principale application de l'invention consiste à remplacer les étiquettes informatives (papier ou plastique) placées sous chaque produit mis à l'étalage dans des magasins de distribution alimentaire et/ou non alimentaire, par des modules d'affichage électronique.

Sur la figure 4, on a illustré un tel agencement possible d'un module d'affichage 7.i qui peut être monté, à l'aide de moyen de verrouillage 24, sur un rail 25 prévu devant une étagère 26 d'un rayonnage de magasin et muni des lignes de transmission de données 4, d'alimentation électrique 5 et de masse 6. Le module d'affichage 7.i peut être connecté à un clavier 27 afin de dialoguer avec l'unité centrale via le réseau.

En effet, le dispositif de l'invention permet, lorsqu'il est relié à l'ordinateur de l'entreprise qui dispose du fichier complet des articles de magasin, les exemples d'application suivants.

A partir de ce fichier, qui contient tous les enregistrements de tous les articles du magasin, il convient de rajouter, pour chaque article, une variable à quatre chiffres (ou plus) qui correspond à l'adresse physique de l'article sur l'étagère du magasin.

Une fois cette saisie effectuée, ce enregistrement est envoyé dans un logiciel afin que les éléments de celui-ci soient contenus dans un format envoyé dans l'interface et puissent être entendus et compris par le module d'affichage concerné.

Ce même ordinateur pouvant piloter les caisses enregistreuses du magasin, une modification d'une variable sur le fichier des articles (prix, libellé, statut, etc...) entraîne la modification immédiate du module concerné, ainsi que la mise à jour simultanée du fichier auquel les caisses font appel pour connaître les variables d'un article.

Ainsi, il n'y a plus de risque d'erreur entre l'information du consommateur à l'étalage et le prix qui doit être payé à la caisse par ce même client.

Par ailleurs, il est possible d'intervenir sur le module d'affichage lui-même par l'envoi de fonctions spécifiques.

Ainsi, lors d'une promotion de vente pour un produit donné dans le magasin, il est possible, par exemple, de déclencher sur le module d'affichage concerné le clignotement d'une diode afin d'attirer l'attention du consommateur.

Le réseau de modules d'affichage étant installé dans tout le magasin, il est possible d'utiliser celui-ci pour transmettre des informations à partir des rayonnages du magasin jusqu'à l'ordinateur principal.

Ce concept permet d'envisager la gestion de la vie d'un article depuis son entrée en entrepôt jusqu'à sa sortie en caisse.

Pour l'entrée en entrepôt, par une simple saisie de la référence de l'article par le biais de son code à barres ou de son code en magasin, il est possible de savoir si cet article a fait l'objet d'une commande chez un fournisseur, en référence au fichier des commandes "fournisseur".

Si ce produit a donné lieu à une commande et qu'il est déjà référencé dans le magasin, il est donc déjà à l'étalage et possède une adresse physique.

Il est donc possible à la réception d'un produit de faire un contrôle (commandes, entrées en stock, présence du produit, contrôle du prix d'ahat, du prix de vente (caisses) et création de produit si celui-ci n'est pas connu).

Le concept de l'invention permet également une gestion très fiable par le biais de l'adressage physique des modules d'affichage.

La saisie de ce type d'informations sur le réseau s'effectue par le clavier alphanumérique 27 associé à un module d'affichage 7.i (figure 4).

Il est possible de réaliser de la même façon les propositions de commandes de réapprovisionnement automatique en utilisant le concept de réseau dans son intégralité, ou de faire des prises de commandes dites "au trou". Dans le deuxième cas, par la saisie sur le module d'affichage à l'aide d'un simple clavier numérique, la saisie de la quantité de réapprovisionnement souhaitée est effectuée et ces informations sont expédiées sur le réseau à destination de l'ordinateur du magasin, et auprès du personnel de l'entrepôt qui peut donc procéder au rechargement des articles concernés.

Il est possible d'envisager toutes les solutions de gestion intervenant dans le cadre d'une transaction d'informations dépendant uniquement du logiciel d'application mis en oeuvre, mais utilisant toujours le même système de réseau.

En ce qui concerne le protocole pour expédier une fonction simple de l'ordinateur ou processeur central vers le module d'affichage désiré, il faut :
- envoyer 2 fois le poids fort du numéro (le poids fort étant composé des 2 premiers chiffres du numéro attribué au module) ;
- envoyer 2 fois le poids faible du numéro (le poids faible étant composé des 2 derniers chiffres du numéro attribué au module) ;
- envoyer l'octet ayant pour valeur la longueur du message de données, ainsi que l'octet ayant pour valeur la fonction attribuée ;
- envoyer l'octet ayant pour valeur la parité ( les 8 bits composant la parité sont égaux à la valeur obenue en additionnant en binaire tous les octets du message envoyé et en ne conservant que les 8 bits de poids faible).

Pour expédier une série de données de l'ordinateur ou processeur central vers le module d'affichage concerné, il faut intercaler le train de données entre les octets (de longueur et de fonction) et l'octet de parité suivant la même organisation décrite plus haut.

La réponse devant intervenir du module d'affichage concerné sera organisée da la même façon que l'envoi d'une fonction simple de l'ordinateur vers le module.

Les octets de longueur et de fonction sont composés de 8 bits :
- les 8 bits de l'octet de longueur du message sont attribués intégralement à la longueur,
- les 8 bits de l'octet de fonction attribuée sont intégralemenbt réservés à la fonction souhaitée.

Le choix des fonctions correspond à une combiaison de 8 bits dont certaines sont définies :
- Test de présence
- Envoi de données
- Demande de flash de diode électroluminescente
- Demande de lecture du nombre
- Demande d'armement
- Demande d'envoi de test
- etc ...

Pour le test de présence rapide de la totalité des modules présents sur le réseau, on réalise un protocole qui se compose de 4 octets correspondant chacun à la valeur Ø suivis de l'envoi d'une fonction simple composée de la fonction "armement".

A chacun des modules présents sur le réseau étant susceptible de comprendre cette information, répond un code δ (δ étant un code arbitraire) au bout d'un certain temps égal à une constante multipliée par le numéro du module correspondant.

Le train des données de réponse récupéré par l'ordinateur ou processeur central est composé d'un nombre de δ égal au nombre de modules présents sur le réseau, chacun des δ étant séparé du début du train des données par le temps défini plus haut.

En cas d'anomalie d'un des modules, le δ correspondant à ce module n'est pas envoyé.

Ce phénomène étant facilement reconnaissable par le système de scrutation, le vol, les anomalies techniques diverses peuvent être presque immédiatement détectés.

En outre, dans le cadre de variantes possibles, l'invention est conçus pour répondre aux exigences suivantes :

- Répartition de messages personnels sur des bureaux disposant de modules d'affichage munis, ou non, d'imprimante ;
- Envoi d'informations de réservations sur des panneaux d'affichage organisés à partir des mêmes modules d'affichage unitaires assemblés entre eux ou non ;
- Visualisation d'informations publicitaires inspirées du même principe d'organisation unitaire ou assemblées en panneau.

## Revendications

1. - Dispositif d'affichage électronique de données, caractérisé en ce qu'il comprend :
- un processeur central (2) présentant une entrée (9) et une sortie (10) de données,
- une pluralité de n modules d'affichage (7.i) (avec $1 \leq i \leq n$) comportant chacun des moyens d'affichage (11) proprement dits reliés à un microprocesseur individuel (12) présentant une entrée (13) et une sortie (14) de données,
- une ligne unique de transmission de données (4), et une ligne de masse (6), chacune desdites lignes (4,6) reliant en parallèle ledit processeur central (2) et chacun desdits modules d'affichage (7.i), et une ligne d'alimentation électrique (5) reliant en parallèle lesdits modules d'affichage (7.i),
- un premier dispositif d'interface (3) associé audit processeur central (2) et qui est adapté pour relier, de façon sélective, l'entrée (9) ou la sortie (10) de données dudit processeur central (2) à ladite ligne de transmission de données (4), et
- des seconds dispositifs d'interface (8.i) qui sont, chacun, associés au microprocesseur (12) d'un module d'affichage (7.i) déterminé et adaptés pour relier, de façon sélective, l'entrée (13) ou la sortie (14) de données dudit microprocesseur (12) à ladite ligne de transmission de données (4).

2. - Dispositif selon la revendication 1, caractérisé en ce que les premier (3) et seconds (8.i) dispositifs d'interface présentent une configuration identique, et comportent chacun, une première liaison (15) reliant la sortie de données (10) du processeur central (2), respectivement la sortie de données (14) du microprocesseur (12) d'un module d'affichage (7.i), à la ligne de transmission de données (4) par l'intermédiaire d'un transistor (16) dont la base (17) est reliée à ladite sortie (10,14) et dont le trajet émetteur-collecteur (18) relie la ligne de transmission de données à la masse ; et une seconde liaison (19) reliant l'entrée de données (9) du processeur central (2), respectivement l'entrée de données (13) du microprocesseur (12) d'un module d'affichage (7.i), à ladite ligne de transmission de données (4) par l'intermédiaire d'un composant électronique à conduction unidirectionnelle (20).

3. - Dispositif selon la revendication 2, caractérisé en ce qu'une résistance de limitation de courant (21) est prévue entre ladite sortie (10, 14) et ledit transistor (16).

4. - Dispositif selon la revendication 2 ou la revendication 3, caractérisé en ce qu'une résistance de limitation de courant et de protection (22) est prévue entre ledit composant électronique à conduction unidirectionnelle (21) et la ligne de transmission de données (4).

*Fig. 1*

0250307

**Fig. 2**

**Fig. 3**

Fig. 4

0250307

# RAPPORT DE RECHERCHE EUROPEENNE

**Office européen des brevets**

Numero de la demande

EP 87 40 1336

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-4 521 677 (SARWIN) <br> * Figures 1,2; colonne 2, lignes 55-68; colonne 3 * | 1 | G 09 F 9/00 // <br> G 06 F 13/40 |
| A | | 2 | |
| Y | DE-A-3 313 107 (SCHULTE-HILLEN) <br> * Figure; pages 4,5 * | 1 | |
| A | | 2 | |
| A | FR-A-2 388 343 (SIEMENS AG) <br> * Figure 2; pages 4,5 * | 2-4 | |
| A | GB-A-2 166 577 (ORDONEZ) <br> * Figures 1,2; page 1, lignes 58-130; page 2 * | 1,2 | DOMAINES TECHNIQUES RECHERCHES (Int. Cl 4) <br><br> G 09 F <br> G 06 F |
| A | FR-A-2 570 534 (TELEPANEL INC.) <br> * Figure; page 3, lignes 22-36; page 7, lignes 13-38 * | 1,2 | |

Le present rapport de recherche a été établi pour toutes les revendications

| Lieu de la recherche | Date d'achèvement de la recherche | Examinateur |
|---|---|---|
| LA HAYE | 21-09-1987 | ALLEN E.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82